# EUROPÄISCHE PATENTSCHRIFT

(11) **EP 3 529 508 B1**
(45) Veröffentlichungstag und Bekanntmachung des Hinweises auf die Patenterteilung: **12.08.2020**
(21) Anmeldenummer: 17811827.9
(22) Anmeldetag: 19.10.2017
(51) Int. Cl.: F16C 17/10

(54) **LAGERELEMENT**
BEARING ELEMENT
ÉLÉMENT DE PALIER

(30) Priorität: 21.10.2016 AT 509692016
(43) Veröffentlichungstag der Anmeldung: 28.08.2019
(73) Patentinhaber: Miba Gleitlager Austria GmbH, 4663 Laakirchen (AT)
(72) Erfinder: HÖLZL, Johannes Sebastian, 4880 Berg im Attergau (AT)
(74) Vertreter: Burger, Hannes
(86) Internationale Anmeldenummer: PCT/AT2017/060273
(87) Internationale Veröffentlichungsnummer: WO 2018/071941

(56) Entgegenhaltungen:
- EP-A1- 1 857 713
- WO-A1-2015/058749
- DE-A1- 2 235 448
- DE-A1- 10 351 524
- DE-A1-102010 053 671
- DE-U1- 29 512 636
- DE-U1- 29 512 636
- FR-A1- 2 415 747
- JP-A- 2013 245 767

## Beschreibung

Die Erfindung betrifft ein Lagerelement für die Lagerung eines Bauteils.

Aus der AT 509 625 B1 ist ein Lagerelement für die Lagerung der Rotornabe einer Windkraftanlage bekannt. Das Lagerelement umfasst einen Außenring, einen Innenring und mehrere Gleitlager-Pads, welche zwischen dem Außenring und dem Innenring angeordnet sind. Das Lagerelement ist für eine Radiale bzw. eine Axiale Kraftbelastung ausgelegt und kann ein überlagertes Kippmoment nur bedingt aufnehmen.

Weitere Lagerelemente sind aus der EP 1 857 713 A1, der DE 10 2010 053671A1, der WO 2015/058749A1, der DE 22 35 448 A1, der DE 295 12 636 U1, der FR 2 415 747 A1, der JP 2013 245767A, sowie der DE 103 51 524 A1 bekannt.

Aufgabe der vorliegenden Erfindung war es, die Nachteile des Standes der Technik zu überwinden und ein Lagerelement zur Verfügung zu stellen, mittels welchem ein mit einer Radialkraft, einer Axialkraft und einem Kippmoment belasteter Bauteil gelagert werden kann.

Diese Aufgabe wird durch eine Vorrichtung gemäß den Ansprüchen gelöst.

Erfindungsgemäß ist ein Lagerelement, insbesondere Rotornabenlagerung, für die Lagerung eines mit einer Radialkraft, einer Axialkraft und einem Kippmoment zu belastenden Bauteils ausgebildet. Das Lagerelement umfasst zumindest ein inneres Ringelement und zumindest ein äußeres Ringelement, welche im unbelasteten Zustand koaxial bezüglich einer zentralen Längsachse zueinander angeordnet sind, wobei zwischen dem inneren Ringelement und dem äußeren Ringelement eine Gleitlagerung ausgebildet ist, die durch zumindest zwei in axialem Abstand zueinander angeordnete Gleitlager gebildet ist. Die Gleitlager sind an einer Aufnahmeseite mit einem der Ringelemente gekoppelt und gegenüberliegend der Aufnahmeseite ist eine Gleitfläche ausgebildet, welche mit einer Lauffläche des gegenüberliegenden Ringelementes zusammenwirkt. Im Neuzustand des Gleitlagers weist die Gleitfläche des Gleitlagers im Querschnitt gesehen zumindest einen ersten Teilabschnitt und einen zweiten Teilabschnitt auf, wobei eine an den ersten Teilabschnitt angelegte Tangente in Bezug zur zentralen Längsachse in einem ersten Winkel angeordnet ist und eine an den zweiten Teilabschnitt angelegte Tangente in Bezug zur zentralen Längsachse in einem zweiten Winkel angeordnet ist, wobei der erste Winkel unterschiedlich groß ist wie der zweite Winkel.

Von Vorteil an der erfindungsgemäßen Ausbildung des Lagerelementes ist, dass der erste Teilabschnitt derart ausgebildet sein kann, dass eine am Lagerelement wirkende Axialkraft bzw. eine Radialkraft gut aufgenommen werden können und der zweite Teilabschnitt des Gleitlagers derart ausgebildet sein kann, dass ein am Lagerelement wirkendes Kippmoment gut aufgenommen werden kann. Im Gegensatz zu herkömmlichen Gleitlagern kommt es durch das erfindungsgemäße Lagerelement bei einer Verkippung des inneren Ringelementes relativ zum äußeren Ringelement nicht zu einer punktförmigen Belastung, sondern kann auch bei einer Verkippung des inneren Ringelementes relativ zum äußeren Ringelement zumindest eine linienförmige Auflage der Gleitfläche an der Lauffläche erreicht werden. Dadurch kann die Flächenpressung gegenüber herkömmlichen Lagerelementen minimiert werden, wodurch auch der Verschleiß an den Lagerelementen minimiert werden kann.

Eine Tangente, welche an die Lauffläche des mit dem Gleitlager zusammenwirkenden Ringelementes angelegt ist, ist in Bezug zur zentralen Längsachse in einem dritten Winkel angeordnet, wobei im unbelasteten Zustand der dritte Winkel der Lauffläche gleich groß ist wie der erste Winkel des ersten Teilabschnittes der Gleitfläche. Von Vorteil ist hierbei, dass durch diese Maßnahme in einem mit einer radialen Kraft bzw. axialen Kraft belasteten Lagerelement, welches keine Verkippung zwischen innerem Ringelement und äußerem Ringelement aufweist und nicht mit Kippmomenten belastet ist, eine linienförmige Berührung ausgebildet sein kann.

Ferner kann vorgesehen sein, dass das Gleitlager mit dem äußeren Ringelement gekoppelt ist und die Gleitfläche an der Innenseite des Gleitlagers ausgebildet ist und die Lauffläche an der Außenseite des inneren Ringelementes ausgebildet ist. Eine derartige Ausbildung des Lagerelementes ist vorteilhaft, wenn das äußere Ringelement als sich drehender Bauteil ausgeführt ist und das innere Ringelement als feststehender Bauteil ausgeführt ist, da dies zu einem verminderten Verschleiß am Lagerelement führt.

In einer alternativen Ausführungsvariante kann vorgesehen sein, dass das Gleitlager mit dem inneren Ringelement gekoppelt ist und die Gleitfläche an der Außenseite des Gleitlagers ausgebildet ist und die Lauffläche an der Innenseite des äußeren Ringelementes ausgebildet ist. Eine derartige Ausbildung des Lagerelementes ist vorteilhaft, wenn das innere Ringelement als sich drehender Bauteil ausgeführt ist und das äußere Ringelement als feststehender Bauteil ausgeführt ist, da dies zu einem verminderten Verschleiß am Lagerelement führt.

Darüber hinaus kann vorgesehen sein, dass zumindest eines der Gleitlager durch in Umfangsrichtung verteilt angeordnete Gleitlager-Pads gebildet ist. Von Vorteil ist hierbei, dass derartige Gleitlagerpads im Wartungsfall einfach zu wechseln bzw. herauszunehmen sind, ohne dass dabei das komplette Lagerelement zerlegt werden muss.

Vorteilhaft ist auch eine Ausprägung, gemäß welcher vorgesehen sein kann, dass bei einem Gleitlager mit einer an der Innenseite angeordneten Gleitfläche der erste Winkel der an den ersten Teilabschnitt angelegten Tangente in Bezug zur zentralen Längsachse kleiner ist als der zweite Winkel der an den zweiten Teilabschnitt angelegten Tangente in Bezug zur zentralen Längsachse und dass bei einem Gleitlager mit einer an der Außenseite angeordneten Gleitfläche der erste Winkel der an den ersten Teilabschnitt angelegten Tangente in Bezug zur zentralen Längsachse größer ist als der zweite Winkel der an den zweiten Teilabschnitt angelegten Tangente in Bezug zur zentralen Längsachse.

Gemäß einer Weiterbildung ist es möglich, dass bei einem durch eine Radialkraft oder eine Axialkraft belasteten Lagerelement die Lauffläche des Ringelementes am ersten Teilabschnitt der Gleitfläche des Gleitlagers, insbesondere entlang einer ersten Berührlinie, anliegt und das Ringelement und das Gleitlager um die zentrale Längsachse zueinander relativverdrehbar sind und dass bei einem durch ein Kippmoment belasten Lagerelement die Lauffläche des Ringelementes am zweiten Teilabschnitt der Gleitfläche des Gleitlagers, insbesondere entlang einer zweite Berührlinie, anliegt und das Ringelement und das Gleitlager um die zentrale Längsachse zueinander relativverdrehbar sind. Von Vorteil ist hierbei, dass jeder der beiden Teilabschnitte zur Lastaufnahme eines speziellen Belastungszustandes ausgebildet ist und dadurch die mögliche Lebensdauer des Lagerelementes erhöht werden kann.

Ferner kann es zweckmäßig sein, wenn die Tangente des zweiten Teilabschnittes derart ausgebildet ist beziehungsweise einen derartigen Winkel aufweist, dass im unbelasteten Zustand des Lagerelementes die Tangente der Lauffläche um den Mittelpunkt des Lagerelementes gedreht deckungsgleich zur Tangente des zweiten Teilabschnittes ist. Von Vorteil ist hierbei, dass bei einer Belastung des Lagerelementes mit einem Kippmoment und daher im verkippten Zustand des äußeren Ringelementes relativ zum inneren Ringelement die Lauffläche und die Gleitfläche an einer zweiten Berührlinie aneinander aufliegen.

Darüber hinaus ist vorgesehen, dass der erste Teilabschnitt und der zweite Teilabschnitt im Querschnitt gesehen durch Geraden gebildet sind, welche durch einen Übergangsradius miteinander verbunden sind. Von Vorteil ist hierbei, dass die im Querschnitt gesehen durch Geraden gebildeten Teilabschnitte mit entsprechenden im Querschnitt gesehen ebenfalls als Geraden ausgebildeten Gegenflächen zusammenwirken können und dabei eine linienförmige Berührung ausgebildet ist. Der Übergangsradius ist vorzugsweise möglichst klein gewählt. Vorzugsweise kann der Übergangsradius annähernd null sein und die Geraden daher direkt einander schneiden und eine Spitze bilden.

Weiters kann vorgesehen sein, dass ein Öffnungswinkel zwischen der an den ersten Teilabschnitt angelegten Tangente und der an den zweiten Teilabschnitt angelegten Tangente zwischen 175° und 179,99°, insbesondere zwischen 178° und 179,99°, bevorzugt zwischen 179° und 179,99°, beträgt. Von Vorteil ist hierbei, dass durch Realisierung eines derartigen Öffnungswinkels entsprechend geringe Lagerspiele erreicht werden können.

Weiters kann vorgesehen sein, dass eine Windkraftanlage mit einer Rotornabe und einer Gondel ausgebildet ist, wobei die Rotornabe mittels dem beschriebenen Lagerelement an der Gondel gelagert ist.

Eine Tangente kann sowohl an eine gekrümmte Kurve, wie etwa einen Kreis, als auch an eine Gerade angelegt werden. Im besonderen Fall einer Geraden liegt die Tangente an die Gerade auf der gesamten Länge auf der Geraden.

Das Lagerelement weist die geometrische Ausbildung im Neuzustand auf. Dies ist insbesondere von Vorteil, da dadurch ein übermäßiger Verschleiß des Gleitlagers möglichst vermieden wird.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel einer Windkraftanlage;
- Fig. 2: eine Querschnittdarstellung eines ersten Ausführungsbeispiels eines Lagerelementes im unbelasteten Zustand;
- Fig. 3: eine Querschnittdarstellung des ersten Ausführungsbeispiels des Lagerelementes im mit einem Kippmoment belasteten Zustand;
- Fig. 4: eine schematische Detaildarstellung des ersten Ausführungsbeispiels des Lagerelementes im unbelasteten Zustand;
- Fig. 5: eine schematische Detaildarstellung des ersten Ausführungsbeispiels des Lagerelementes im mit einer Axialkraft und/oder einer Radialkraft belasteten Zustand;
- Fig. 6: eine schematische Detaildarstellung des ersten Ausführungsbeispiels des Lagerelementes im mit einem Kippmoment belasteten Zustand;
- Fig. 7: eine schematische Detaildarstellung eines zweiten Ausführungsbeispiels des Lagerelementes im unbelasteten Zustand;
- Fig. 8: eine schematische Detaildarstellung des zweiten Ausführungsbeispiels des Lagerelementes im mit einer Axialkraft und/oder einer Radialkraft belasteten Zustand;
- Fig. 9: eine schematische Detaildarstellung des zweiten Ausführungsbeispiels des Lagerelementes im mit einem Kippmoment belasteten Zustand.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

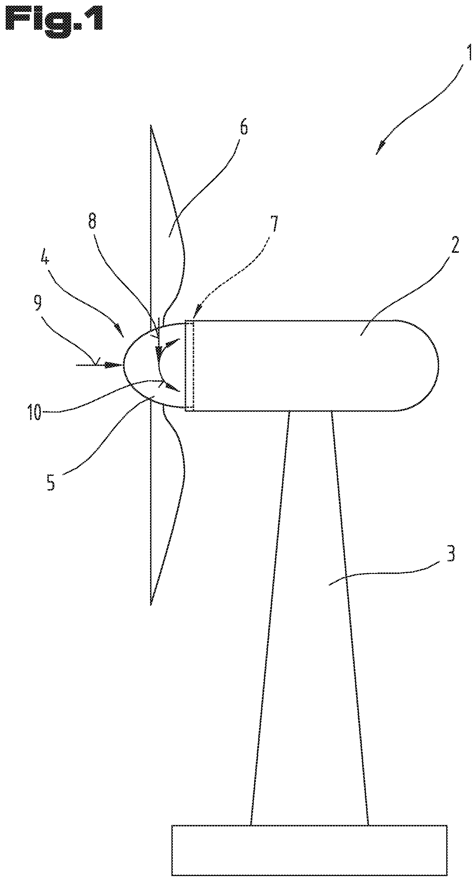

Fig. 1 zeigt eine schematische Darstellung einer Windkraftanlage 1 zum Erzeugen von elektrischer Energie aus Windenergie. Die Windkraftanlage 1 umfasst eine Gondel 2, welche an einem Turm 3 drehbar aufgenommen ist. In der Gondel 2 sind die elektrotechnischen Komponenten wie etwa Generator der Windkraftanlage 1 angeordnet.

Weiters ist ein Rotor 4 ausgebildet, welcher eine Rotornabe 5 mit daran angeordneten Rotorblättern 6 aufweist. Insbesondere ist vorgesehen, dass die Rotornabe 5 mittels einem Lagerelement 7 drehbeweglich an der Gondel 2 aufgenommen ist.

Von besonderem Vorteil ist es, wenn das Lagerelement 7 entsprechend den in diesem Dokument beschriebenen Ausführungen ausgebildet ist, da besonders beim Einsatz von nur einem Lagerelement 7 zur Lagerung der Rotornabe 5 an der Gondel 2 sowohl eine Radialkraft 8 als auch eine Axialkraft 9 und ein Kippmoment 10 vom Lagerelement 7 aufgenommen werden müssen. Die Axialkraft 9 ergibt sich durch die Kraft des Windes. Die Radialkraft 8 entspricht der Gewichtskraft des Rotors 4 und greift am Schwerpunkt des Rotors 4 an. Da der Schwerpunkt des Rotors 4 außerhalb des Lagerelementes 7 liegt, wird im Lagerelement 7 durch die Radialkraft 8 das Kippmoment 10 hervorgerufen. Das Kippmoment 10 kann ebenfalls durch eine ungleichmäßige Belastung der Rotorblätter 6 hervorgerufen werden.

Alternativ zum Einsatz des Lagerelementes 7 in einer Windkraftanlage 1 ist es auch denkbar, dass ein derartig ausgebildetes Lagerelement 7 beispielsweise an einem Drehkranz eines Baggers eingesetzt wird oder an einer sonstigen Anwendung wo sowohl eine Radialkraft 8 und/oder eine Axialkraft 9, als auch ein Kippmoment 10 auf das Lagerelement 7 wirken.

Die erfindungsgemäßen Lagerelemente 7 können beispielsweise einen Durchmesser zwischen 0,5 m und 5 m aufweisen. Natürlich ist es auch denkbar, dass die Lagerelemente 7 kleiner oder größer sind.

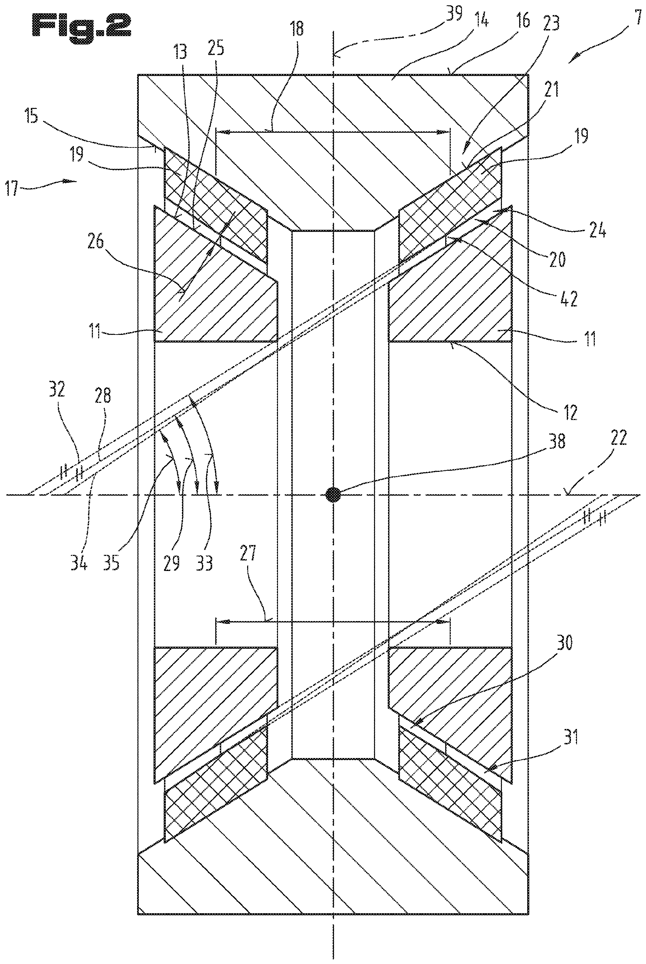

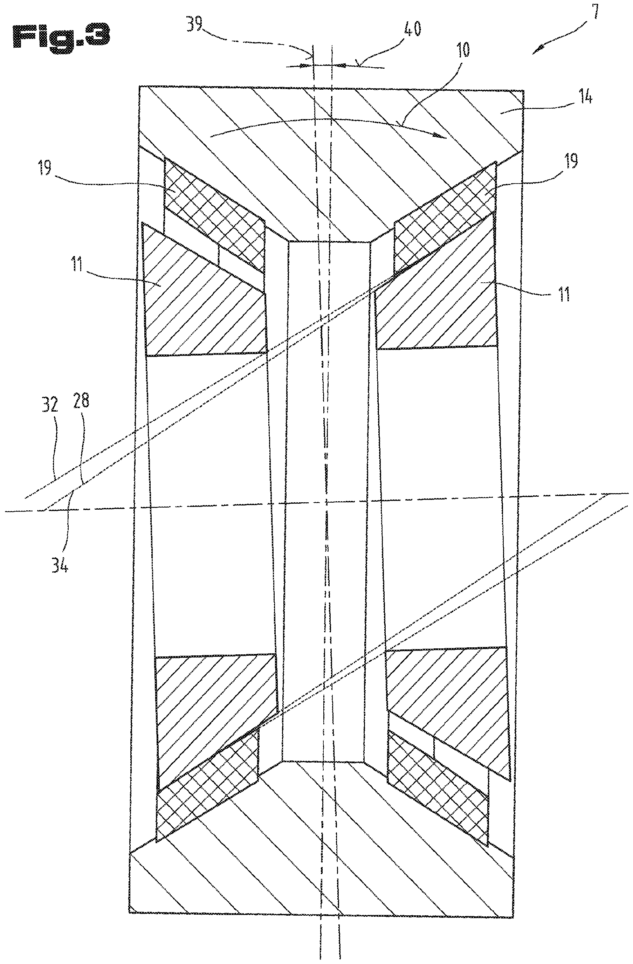

In der Fig. 2 ist ein erstes Ausführungsbeispiel des Lagerelementes 7 in einem unbelasteten Zustand dargestellt. In der Fig. 3 ist das erste Ausführungsbeispiel des Lagerelementes 7 aus Fig. 2 in einem mit einem Kippmoment 10 belasteten Zustand dargestellt, wobei wiederum für gleiche Teile gleiche Bezugszeichen bzw. Bauteilbezeichnungen wie in der vorangegangenen Fig. 2 verwendet werden. Um unnötige Wiederholungen zu vermeiden, wird das Lagerelement 7 auf Basis einer Zusammenschau der Figuren 2 und 3 beschrieben.

Das Lagerelement 7 umfasst zumindest ein inneres Ringelement 11, welches eine Innenseite 12 und eine Außenseite 13 aufweist. Weiters ist ein äußeres Ringelement 14 vorgesehen, welches eine Innenseite 15 und eine Außenseite 16 aufweist. Außerdem ist zwischen dem inneren Ringelement 11 und dem äußeren Ringelement 14 eine Gleitlagerung 17 ausgebildet, die zumindest zwei in einem axialen Abstand 18 zueinander beabstandete Gleitlager 19 umfasst. Die beiden Gleitlager 19 weisen jeweils eine Innenseite 20 und eine Außenseite 21 auf.

In der Darstellung der Fig. 2 ist das Lagerelement 7 in einem unbelasteten Zustand dargestellt. Als unbelasteter Zustand wird hierbei jener Zustand definiert, in welchem keine Kräfte daher auch keine Schwerkräfte auf das Lagerelement 7 wirken. Dieser Zustand ist fiktional und wird daher lediglich zur Veranschaulichung der Bauteile bzw. der Funktion des Lagerelementes 7 dargestellt. Wie aus Fig. 2 ersichtlich, sind im unbelasteten Zustand des Lagerelementes 7 das innere Ringelement 11 und das äußere Ringelement 14 und die Gleitlager 19 konzentrisch bezüglich einer gemeinsamen zentralen Längsachse 22 angeordnet.

Im ersten Ausführungsbeispiel des Lagerelementes 7, wie es in den Figuren 2 bis 6 dargestellt ist, sind die Gleitlager 19 mit dem äußeren Ringelement 14 gekoppelt. Die Seite des Gleitlagers 19, welche mit dem äußeren Ringelement 14 gekoppelt ist, wird im vorliegenden Ausführungsbeispiel als Aufnahmeseite 23 des Gleitlagers bezeichnet. An der Aufnahmeseite 23 des Gleitlagers 19 findet keine Relativbewegung zwischen dem Gleitlager 19 und dem äußeren Ringelement 14 statt. Eine derartige Kopplung des Gleitlagers 19 mit dem äußeren Ringelement 14 kann beispielsweise durch Maßnahmen wie sie schon in der AT 509 625 B1 beschrieben wurden, erreicht werden.

Weiters ist es auch denkbar, dass das Gleitlager 19 beispielsweise mittels einer Klebeverbindung im äußeren Ringelement 14 aufgenommen ist. In wieder einem anderen Ausführungsbeispiel ist es auch möglich, dass das Gleitlager 19 beispielsweise formschlüssig im äußeren Ringelement 14 aufgenommen ist.

Das Gleitlager 19 kann dabei in mehrere auf den Umfang verteilte Ringsegmente aufgeteilt sein. Weiters ist es auch denkbar, dass das Gleitlager 19 als einzelner umlaufender Ring ausgebildet ist. Ein derartiger umlaufender Ring kann beispielsweise in das äußere Ringelement 14 eingelegt sein, wobei durch eine Reibverbindung ein Mitdrehen des Gleitlagers 19 relativ zum äußeren Ringelement 14 unterbunden wird.

Gegenüberliegend der Aufnahmeseite 23 des Gleitlagers 19 ist eine Gleitfläche 24 ausgebildet, welche mit einer Lauffläche 25 des inneren Ringelementes 11 zusammenwirkt. Im ersten Ausführungsbeispiel ist die Außenseite 13 des inneren Ringelementes 11 als Lauffläche 25 ausgebildet.

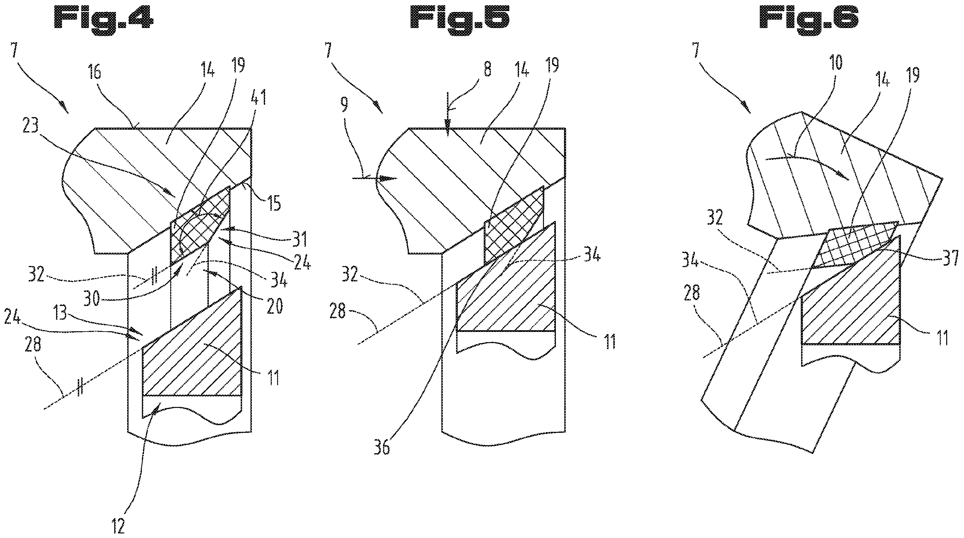

Insbesondere ist im ersten Ausführungsbeispiel vorgesehen, dass sich das Gleitlager 19 relativ zum inneren Ringelement 11 verdreht und eine Gleitbewegung zwischen der Gleitfläche 24 des Gleitlagers 19 und der Lauffläche 25 des inneren Ringelementes 11 ermöglicht wird. Dadurch kann die Funktion des Lagerelementes 7 realisiert werden. Die genaue Funktion bzw. die genauen Zusammenhänge des Lagerelementes 7 werden in den Fig. 4 bis 6 im Detail gezeigt bzw. dienen diese Darstellungen als Ergänzung zum Verständnis des ersten Ausführungsbeispiels des Lagerelementes 7.

Zwischen dem inneren Ringelement 11 und dem Gleitlager 19 ist, wie in der Fig. 2 dargestellt, ein Lagerspiel 26 ausgebildet.

An dieser Stelle sei erwähnt, dass sowohl in den Figuren 2 und 3, als auch in den Figuren 4 bis 6 und 7 bis 9 das Lagerspiel 26 zur Veranschaulichung übertrieben groß dargestellt ist. Insbesondere in den Figuren 4 bis 6 und 7 bis 9 ist auch die Geometrie der Gleitlagerung stark übertrieben dargestellt, um die Funktion und die technischen Effekte anschaulich darstellen zu können.

Wie aus Fig. 2 ersichtlich, kann vorgesehen sein, dass zwei innere Ringelemente 11 ausgebildet sind, welche in einem Abstand 27 zueinander angeordnet sind. Die Außenseiten 13 der inneren Ringelemente 11 sind jeweils konisch ausgebildet und einander zugewandt. Durch den Abstand 27 der beiden inneren Ringelemente 11 zueinander kann das Lagerspiel 26 eingestellt werden.

Die Lauffläche 25 ist eine bezüglich der zentralen Längsachse 22 rotationssymmetrisch ausgebildete Fläche, welche die spezielle Form eines Kegelstumpfes aufweist. Im Querschnitt des Lagerelementes 7 gesehen, wie in Fig. 2 dargestellt, bildet die Lauffläche 25 eine Gerade. Legt man an die Lauffläche 25 eine Tangente 28 an, so ist diese Tangente 28 in einem Winkel 29 bezüglich der zentralen Längsachse 22 ausgebildet.

Wie aus Fig. 2 und besonders gut in der übertriebenen Darstellung nach Fig. 4 ersichtlich, ist vorgesehen, dass das Gleitlager 19 an dessen Gleitfläche 24 einen ersten Teilabschnitt 30 und einen zweiten Teilabschnitt 31 aufweist.

Eine an den ersten Teilabschnitt 30 angelegte Tangente 32 ist in einem Winkel 33 zur zentralen Längsachse 22 angeordnet. Eine an den zweiten Teilabschnitt 31 angelegte Tangente 34 ist in einem Winkel 35 zur zentralen Längsachse 22 angeordnet.

Insbesondere ist vorgesehen, dass der Winkel 35 des zweiten Teilabschnittes 32 und der Winkel 33 des ersten Teilabschnittes 30 unterschiedlich groß sind. Weiters ist vorgesehen, dass der Winkel 29 der Lauffläche 25 und der Winkel 33 des ersten Teilabschnittes 30 gleich groß sind und somit in unbelasteten Zustand des Lagerelementes 7 die Tangente 28 der Lauffläche 25 und die Tangente 32 des ersten Teilabschnittes 30 parallel zueinander liegen. In der dreidimensionalen Darstellung betrachtet weisen daher die Lauffläche 25 und der erste Teilabschnitt 30 eine Mantelfläche eines Kegelstumpfes mit gleichem Öffnungswinkel auf.

Wenn das Lagerelement 7, wie in Fig. 5 dargestellt, mit einer Axialkraft 9 und/oder einer Radialkraft 8 belastet wird, so kommen der erste Teilabschnitt 30 der Gleitfläche 24 des Gleitlagers 19 und die Lauffläche 25 des inneren Ringelementes 11 an einer ersten Berührlinie 36 aneinander zum Anliegen. Die Gleitfläche 24 des Gleitlagers 19 und die Lauffläche 25 des inneren Ringelementes 11 berühren sich deswegen an der ersten Berührlinie 36 aneinander, da es durch die Radialkraft 8 bzw. durch die Axialkraft 9 zu einer Parallelverschiebung der beiden Bauteile zueinander kommt. Die Parallelverschiebung bewegt sich natürlich im hundertstel bis zehntel Millimeter Bereich und ist stark übertrieben dargestellt.

Wenn jedoch entsprechend der Darstellung in den Figuren 3 und 6 in das Lagerelement 7 ein Kippmoment 10 eingeleitet wird, so kommt es zu einer Verkippung des äußeren Ringelementes 14 relativ zum inneren Ringelement 11, wodurch der zweite Teilabschnitt 31 der Gleitfläche 24 des Gleitlagers 19 an der Lauffläche 25 des inneren Ringelementes 11 an einer zweiten Berührlinie 37 anliegt.

Wie aus Fig. 3 ersichtlich, liegen hierbei die beiden Gleitlager 19 diagonal gegenüberliegend an den inneren Ringelementen 11 auf. Bei dieser beschriebenen Verkippung kommt es insbesondere zu einer Verdrehung des äußeren Ringelementes 14 relativ zum inneren Ringelement 11 bezüglich einem Drehpunkt 38, welcher im Schnittpunkt zwischen der zentralen Längsachse 22 und einer Längsmittelachse 39 liegt.

Ideal ist es natürlich, wenn nach der besprochenen Verkippung des äußeren Ringelementes 14 die Tangente 28 der Lauffläche 25 und die Tangente 34 des zweiten Teilabschnittes 31 der Gleitfläche 24 des Gleitlagers 19 deckungsgleich aufeinander liegen. Dadurch kommt es somit auch bei einer Belastung des Lagerelementes 7 durch ein Kippmoment 10 zu einer linienförmigen Berührung zwischen der Gleitfläche 24 und der Lauffläche 25, wodurch die Flächenpressung und somit der Verschleiß an der Gleitfläche 24 verringert werden kann.

Die Deckungsgleichheit der Tangente 34 des zweiten Teilabschnittes 31 und der Tangente 28 der Lauffläche 25 nach dem Verkippen kann dadurch erreicht werden, dass bei der Konstruktion des Gleitlagers 19 im unbelasteten Zustand entsprechend Fig. 2 die Tangente 28 an die Lauffläche 25 genommen wird und bezüglich dem Drehpunkt 38 um einen bestimmten Winkel verdreht wird, sodass diese die Tangente 34 des zweiten Teilabschnittes 31 bildet und sich mit der Tangente 32 des ersten Teilabschnittes 30 in etwa mittig des Gleitlagers 19 schneidet. Die Größe dieses Winkels, um welchen bei der Konstruktion des Gleitlagers 19 die Tangente 28 an die Lauffläche 25 verdreht wird, bestimmt anschließend den maximalen Auslenkwinkel 40.

Zwischen der Tangente 34 des zweiten Teilabschnittes 31 und der Tangente 32 des ersten Teilabschnittes 30 ist ein Öffnungswinkel 41 ausgebildet, welcher einem Winkel von 180° minus dem maximalen Auslenkwinkel 40 entspricht. Bei entsprechend geringem Lagerspiel 26, welches sich im hundertstel Millimeter bis zehntel Millimeterbereich bewegt, ist dementsprechend auch der maximale Auslenkwinkel 40 im hundertstel bis zehntel Gradbereich angesiedelt.

Weiters kann vorgesehen sein, dass zwischen dem ersten Teilabschnitt 30 und dem zweiten Teilabschnitt 31 ein Übergangsradius 42 ausgebildet ist, welcher fertigungsbedingt ist. Bevorzugt wird der Übergangsradius 42 möglichst gering ausfallen, sodass die erste Berührlinie 36 bzw. die zweite Berührlinie 37 möglichst lang sind und somit eine möglichst geringe Flächenpressung zwischen der Gleitfläche 24 des Gleitlagers 19 und der Lauffläche 25 des inneren Ringelementes 11 auftritt. Mit anderen Worten ausgedrückt werden im Idealfall der erste Teilabschnitt 30 und der zweite Teilabschnitt 31 direkt bzw. möglichst ohne Übergangsradius 42 aneinander anschließen.

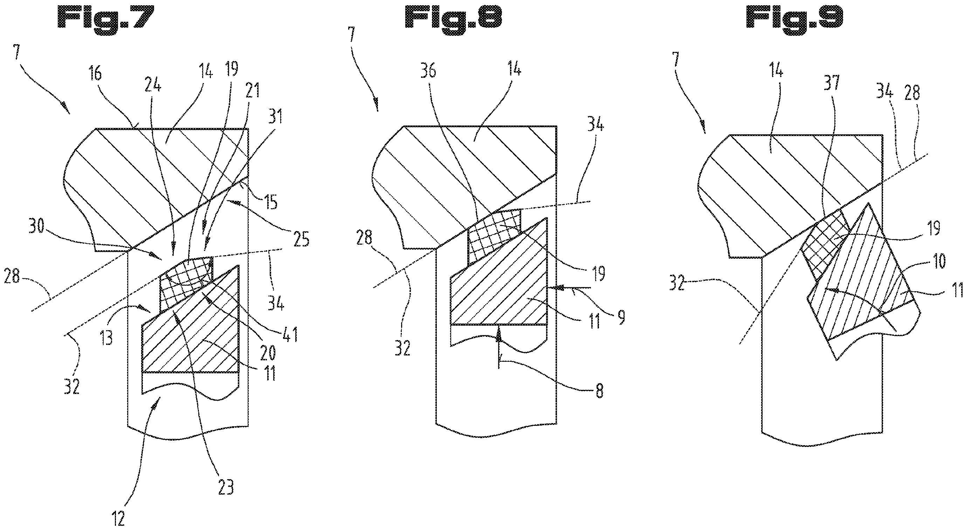

In den Figuren 7 bis 9 ist in einem zweiten Ausführungsbeispiel eine weitere und gegebenenfalls für sich eigenständige Ausführungsform des Lagerelementes 7 gezeigt, wobei wiederum für gleiche Teile gleiche Bezugszeichen bzw. Bauteilbezeichnungen wie in den vorangegangenen Figuren 2 bis 6 verwendet werden. Um unnötige Wiederholungen zu vermeiden, wird auf die detaillierte Beschreibung in den vorangegangenen Figuren 2 bis 6 hingewiesen bzw. Bezug genommen.

In dem zweiten Ausführungsbeispiel des Lagerelementes 7 kann vorgesehen sein, dass das Gleitlager 19 mit dem inneren Ringelement 11 gekoppelt ist und eine Gleitbewegung zwischen dem Gleitlager 19 und dem äußeren Ringelement 14 stattfindet.

Wie aus dem zweiten Ausführungsbeispiel ersichtlich, kann das Gleitlager 19 mit dem inneren Ringelement 11 gekoppelt sein und somit die Aufnahmeseite 23 des Gleitlagers 19 an dessen Innenseite 20 ausgebildet sein. Entsprechend dazu ist in diesem Ausführungsbeispiel die Gleitfläche 24 des Gleitlagers 19 an dessen Außenseite 21 ausgebildet und wirken mit der Innenseite 15 des äußeren Ringelementes 14 zusammen, welches in diesem Ausführungsbeispiel als Lauffläche 25 ausgebildet ist.

Die Zusammenhänge zwischen dem ersten Teilabschnitt 30 und dem zweiten Teilabschnitt 31 der Gleitfläche 24 des Gleitlagers 19 und der damit zusammenwirkenden Lauffläche 25 des äußeren Ringelementes 14 verhalten sich analog zum bereits in den Fig. 2 bis 6 beschriebenen ersten Ausführungsbeispiel. Der kürze halber wird das zweite Ausführungsbeispiel deshalb nicht gesondert detailliert beschrieben, sondern ist dem Fachmann auf Basis der Beschreibung zu dem in den Figuren 2 bis 6 beschriebenen ersten Ausführungsbeispiel bzw. auf Basis der Figuren 7 bis 9 die Funktion klar ersichtlich.

Ein derartiges zweites Ausführungsbeispiel des Lagerelementes 7 mit einem innen angeordneten Gleitlager 19, wie es in den Fig. 7 bis 9 dargestellt ist, wird vorzugsweise dann verwendet, wenn das äußere Ringelement 14 ortsfest ausgebildet ist und das innere Ringelement 11 mitsamt dem Gleitlagerelement 19 relativ zum äußeren Ringelement 14 verdrehbar ist.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

ben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Windkraftanlage | 30 | erster Teilabschnitt |
| 2 | Gondel | 31 | zweiter Teilabschnitt |
| 3 | Turm | 32 | Tangente erster Teilabschnitt |
| 4 | Rotor | 33 | Winkel erster Teilabschnitt |
| 5 | Rotornabe | 34 | Tangente zweiter Teilabschnitt |
| 6 | Rotorblatt | 35 | Winkel zweiter Teilabschnitt |
| 7 | Lagerelement | 36 | erste Berührlinie |
| 8 | Radialkraft | 37 | zweite Berührlinie |
| 9 | Axialkraft | 38 | Drehpunkt |
| 10 | Kippmoment | 39 | Längsmittelachse |
| 11 | inneres Ringelement | 40 | maximaler Auslenkwinkel |
| 12 | Innenseite inneres Ringelement | 41 | Öffnungswinkel |
| 13 | Außenseite inneres Ringelement | 42 | Übergangsradius |
| 14 | äußeres Ringelement | | |
| 15 | Innenseite äußeres Ringelement | | |
| 16 | Außenseite äußeres Ringelement | | |
| 17 | Gleitlagerung | | |
| 18 | axialer Abstand | | |
| 19 | Gleitlager | | |
| 20 | Innenseite Gleitlager | | |
| 21 | Außenseite Gleitlager | | |
| 22 | zentrale Längsachse | | |
| 23 | Aufnahmeseite Gleitlager | | |
| 24 | Gleitfläche Gleitlager | | |
| 25 | Lauffläche | | |
| 26 | Lagerspiel | | |
| 27 | Abstand innere Ringelemente | | |
| 28 | Tangente Lauffläche | | |
| 29 | Winkel Lauffläche | | |

## Patentansprüche

1. Lagerelement (7), insbesondere Rotornabenlagerung, für die Lagerung eines mit einer Radialkraft (8) und/ einer Axialkraft (9) und einem Kippmoment (10) zu belastenden Bauteils, mit zumindest einem inneren Ringelement (11) und zumindest einem äußeren Ringelement (14), welche im unbelasteten Zustand koaxial bezüglich einer zentralen Längsachse (22) zueinander angeordnet sind, wobei zwischen dem inneren Ringelement (11) und dem äußeren Ringelement (14) eine Gleitlagerung (17) ausgebildet ist, die durch zumindest zwei in axialem Abstand (18) zueinander angeordneten Gleitlagern (19) gebildet ist, wobei die Gleitlager (19) an einer Aufnahmeseite (23) jeweils mit einem der Ringelemente (11, 14) gekoppelt sind und gegenüberliegend der Aufnahmeseite (23) jeweils eine Gleitfläche (24) ausgebildet ist, welche mit einer Lauffläche (25) des gegenüberliegenden Ringelementes (11, 14) zusammenwirkt, wobei eine Tangente (28), welche an die Lauffläche (25) des mit den Gleitlagern (19) zusammenwirkenden Ringelementes (11, 14) angelegt ist, in Bezug zur zentralen Längsachse (22) in einem dritten Winkel (29) angeordnet ist, **dadurch gekennzeichnet, dass** im Neuzustand des Gleitlagers (19) die Gleitfläche (24) des Gleitlagers (19) im Querschnitt gesehen zumindest einen ersten Teilabschnitt (30) und einen zweiten Teilabschnitt (31) aufweist, wobei eine an den ersten Teilabschnitt (30) angelegte Tangente (32) in Bezug zur zentralen Längsachse (22) in einem ersten Winkel (33) angeordnet ist und eine an den zweiten Teilabschnitt (31) angelegte Tangente (34) in Bezug zur zentralen Längsachse (22) in einem zweiten Winkel (35) angeordnet ist, wobei der erste Winkel (33) unterschiedlich groß ist wie der zweite Winkel (35), wobei im unbelasteten Zustand der dritte Winkel (29) der Lauffläche (25) gleich groß ist wie der erste Winkel (33) des ersten Teilabschnittes (30) der Gleitfläche (24),
wobei die Lauffläche (25) bezüglich der zentralen Längsachse (22) rotationssymmetrisch ausgebildet ist, und die Form eines Kegelstumpfes aufweist, und wobei der erste Teilabschnitt (30) und der zweite Teilabschnitt (31) im Querschnitt gesehen durch Geraden gebildet sind, welche durch einen Übergangsradius (42) miteinander verbunden sind.

2. Lagerelement nach Anspruch 1, **dadurch gekennzeichnet, dass** das Gleitlager (19) mit dem äußeren Ringelement (14) gekoppelt ist und die Gleitfläche (24) an der Innenseite (20) des Gleitlagers (19) ausgebildet ist und die Lauffläche (25) an der Außenseite (13) des inneren Ringelementes (11) ausgebildet ist.

3. Lagerelement nach einem der vorhergehenden Ansprüche, **dadurch gekennzeichnet, dass** zumindest eines der Gleitlager (19) durch in Umfangsrichtung verteilt angeordnete Gleitlager-Pads gebildet ist.

4. Lagerelement nach einem der vorhergehenden Ansprüche, **dadurch gekennzeichnet, dass** bei einem Gleitlager (19) mit einer an der Innenseite (20) angeordneten Gleitfläche (24) der erste Winkel (33) der an den ersten Teilabschnitt (30) angelegten Tangente (32) in Bezug zur zentralen Längsachse (22) kleiner ist als der zweite Winkel (35) der an den zweiten Teilabschnitt (31) angelegten Tangente (34) in Bezug zur zentralen Längsachse (22) und dass bei einem Gleitlager (19) mit einer an der Außenseite (21) angeordneten Gleitfläche (24) der erste Winkel (33) der an den ersten Teilabschnitt (30) angelegten Tangente (32) in Bezug zur zentralen Längsachse (22) größer ist als der zweite Winkel (35) der an den zweiten Teilabschnitt (31) angelegten Tangente (34) in Bezug zur zentralen Längsachse (22).

5. Lagerelement nach einem der vorhergehenden Ansprüche, **dadurch gekennzeichnet, dass** bei einem durch eine Radialkraft (8) oder eine Axialkraft (9) belasteten Lagerelement (7) die Lauffläche (25) des Ringelementes (11, 14) am ersten Teilabschnitt (30) der Gleitfläche (24) des Gleitlagers (19), insbesondere entlang einer ersten Berührlinie (36), anliegt und das Ringelement (11, 14) und das Gleitlager (19) um die zentrale Längsachse (22) zueinander relativverdrehbar sind und dass bei einem durch ein Kippmoment (10) belasten Lagerelement (7) die Lauffläche (25) des Ringelementes (11, 14) am zweiten Teilabschnitt (31) der Gleitfläche (24) des Gleitlagers (19), insbesondere entlang einer zweite Berührlinie (37), anliegt und das Ringelement (11, 14) und das Gleitlager (19) um die zentrale Längsachse (22) zueinander relativverdrehbar sind.

6. Lagerelement nach einem der vorhergehenden Ansprüche, **dadurch gekennzeichnet, dass** die Tangente (34) des zweiten Teilabschnittes (31) derart ausgebildet ist beziehungsweise einen derartigen Winkel (35) aufweist, dass im unbelasteten Zustand des Lagerelementes (7) die Tangente (28) der Lauffläche (25) um den Mittelpunkt des Lagerelementes (7) gedreht deckungsgleich zur Tangente (34) des zweiten Teilabschnittes (31) ist.

7. Lagerelement nach einem der vorhergehenden Ansprüche, **dadurch gekennzeichnet, dass** ein Öffnungswinkel (41) zwischen der an den ersten Teilabschnitt (30) angelegten Tangente (32) und der an den zweiten Teilabschnitt (31) angelegten Tangente (34) zwischen 175° und 179,99°, insbesondere zwischen 178° und 179,99°, bevorzugt zwischen 179° und 179,99°, beträgt.

8. Windkraftanlage (1) mit einer Rotornabe (5) und einer Gondel (2), wobei die Rotornabe (5) mittels einem Lagerelement (7) an der Gondel (2) gelagert ist, dadurch gekenn zeichnet, dass das Lagerelement (7) nach einem der vorhergehenden Ansprüche ausgebildet ist.

## Claims

1. A bearing element (7), in particular a rotor hub bearing, for the bearing of a component to be subjected to a radial force (8) and/or an axial force (9) and a tilting torque (10), comprising at least one inner ring element (11) and at least one outer ring element (14), which, in an unloaded condition, are arranged coaxially to one another with respect to a central longitudinal axis (22), wherein a sliding bearing (17) is formed between the inner ring element (11) and the outer ring element (14), which is formed by at least two plain bearings (19) arranged at an axial distance (18) from one another, wherein each of the plain bearings (19) is coupled with one of the ring elements (11, 14) on a receiving side (23), and a sliding surface (24) is formed opposite each receiving side (23), which interacts with a running surface (25) of the opposite ring element (11, 14), wherein a tangent (28) applied to the running surface (25) of the ring element (11, 14) interacting with the plain bearings (19) is arranged at a third angle (29) with respect to the central longitudinal axis (22), **characterized in that** in the new state of the plain bearing (19), the sliding surface (24) of the plain bearing (19) has at least one first segment (30) and one second segment (31) in a cross-sectional view, wherein a tangent (32) applied to the first segment (30) is arranged at a first angle (33) with respect to the central longitudinal axis (22) and a tangent (34) applied to the second segment (31) is arranged at a second angle (35) with respect to the central longitudinal axis (22), wherein the first angle (33) differs in size from the second angle (35),
wherein in an unloaded state the third angle (29) of the running surface (25) has the same size as the first angle (33) of the first segment (30) of the sliding surface (24), wherein the running surface (25) is formed rotationally symmetrically with respect to the central longitudinal axis (22) and has the shape of a frustum, and wherein the first segment (30) and the second segment (31) are formed by straight lines in a cross-sectional view, which are connected via a transition radius (42).

2. The bearing element according to claim 1, **characterized in that** the plain bearing (19) is coupled with the outer ring element (14), and the sliding surface (24) is formed on the inner surface (20) of the plain bearing (19), and the running surface (25) is formed on the outer surface (13) of the inner ring element (11).

3. The bearing element according to one of the preceding claims, **characterized in that** at least one of the plain bearings (19) is formed by plain bearing pads spaced in a peripheral direction.

4. The bearing element according to one of the preceding claims, **characterized in that** on a plain bearing (19) having a sliding surface (20) arranged on the inner surface (24), the first angle (33) of the tangent (32) applied to the first segment (30) with respect to the central longitudinal axis (22) is smaller than the second angle (35) of the tangent (34) applied to the second segment (31) with respect to the central longitudinal axis (22), and that on a plain bearing (19) having a sliding surface (24) arranged on the outer surface (21), the first angle (33) of the tangent (32) applied to the first segment (30) with respect to the central longitudinal axis (22) is greater than the second angle (35) of the tangent (34) applied to the second segment (31) with respect to the central longitudinal axis (22).

5. The bearing element according to one of the preceding claims, **characterized in that** on a bearing element (7) subjected to a radial force (8) or an axial force (9), the running surface (25) of the ring element (11, 14) is in contact with the first segment (30) of the sliding surface (24) of the plain bearing (19), in particular along a first line of contact (36), and the ring element (11, 14) and the plain bearing (19) are rotatable relative to one another about the central longitudinal axis (22) and that on a bearing element (7) subjected to a tilting torque (10), the running surface (25) of the ring element (11, 14) is in contact with the second segment (31) of the sliding surface (24) of the plain bearing (19), in particular along a second line of contact (37), and the ring element (11, 14) and the plain bearing (19) are rotatable relative to one another about the central longitudinal axis (22).

6. The bearing element according to one of the preceding claims, **characterized in that** the tangent (34) of the second segment (31) is provided in such a way and/or has such an angle (35) that in an unloaded state of the bearing element (7), the tangent (28) of the running surface (25) rotated about the center of the bearing element (7) is congruent with the tangent (34) of the second segment (31).

7. The bearing element according to one of the preceding claims, **characterized in that** an opening angle (41) between the tangent (32) applied to the first segment (30) and the tangent (34) applied to the second segment (31) measures between 175° and 179.99°, in particular between 178° and 179.99°, preferably between 179° and 179.99°.

8. A wind turbine (1) comprising a rotor hub (5) and a nacelle (2), wherein the rotor hub (5) is mounted on the nacelle (2) by means of a bearing element (7), **characterized in that** the bearing element (7) is formed according to one of the preceding claims.

## Revendications

1. Elément de support (7), en particulier palier de moyeu de rotor, pour le support d'un composant devant être soumis à une contrainte par force radiale (8) et/ou par force axiale (9) et par couple de basculement (10), avec au moins un élément annulaire (11) intérieur et au moins un élément annulaire (14) extérieur, lesquels sont disposés, dans l'état non soumis à contrainte, de façon coaxiale entre eux par rapport à un axe longitudinal (22) central, un palier à glissement (17) étant constitué entre l'élément annulaire (11) intérieur et l'élément annulaire (14) extérieur et étant formé d'au moins deux paliers lisses (19) disposés à une distance axiale (18) l'un de l'autre, les paliers lisses (19) étant, sur un côté réception (23), couplés respectivement à l'un des éléments annulaires (11, 14), et respectivement une surface de glissement (24) étant constituée en face du côté réception (23), laquelle coopère avec une surface de roulement (25) de l'élément annulaire (11, 14) opposé, une tangente (28), laquelle est appuyée contre la surface de roulement (25) de l'élément annulaire (11, 14) coopérant avec les paliers lisses (19), étant disposée en formant un troisième angle (29) par rapport à l'axe longitudinal (22) central, **caractérisé en ce que**, à l'état neuf du palier lisse (19), la surface de glissement (24) du palier lisse (19) présente, vue en coupe transversale, au moins un premier tronçon partiel (30) et un deuxième tronçon partiel (31), une tangente (32) appuyée contre le premier tronçon partiel (30) étant disposée un faisant un premier angle (33) par rapport à l'axe longitudinal (22) central, et une tangente (34) appuyée contre le deuxième tronçon partiel (31) étant disposée en formant un deuxième angle (35) par rapport à l'axe longitudinal (22) central, le premier angle (33) étant de grandeur différente de celle du deuxième angle (35),
le troisième angle (29) de la surface de roulement (25) étant, dans l'état non soumis à contrainte, de même grandeur que le premier angle (33) du premier tronçon partiel (30) de la surface de glissement (24),
la surface de roulement (25) étant constituée en symétrie de rotation par rapport à l'axe longitudinal (22) central et présentant la forme d'un tronc de cône, et le premier tronçon partiel (30) et le deuxième tronçon partiel (31) étant, vus en coupe transversale, formés par des droites qui sont raccordées les unes aux autres par un rayon de transition (42).

2. Elément de support selon la revendication 1, **caractérisé en ce que** le palier lisse (19) est couplé à l'élément annulaire (14) extérieur, et la surface de glissement (24) est constituée sur le côté intérieur (20) du palier lisse (19), et la surface de roulement (25) est constituée sur le côté extérieur (13) de l'élément annulaire (11) intérieur.

3. Elément de support selon l'une des revendications précédentes, **caractérisé en ce qu'**au moins un des paliers lisses (19) est formé par des pads de palier lisse disposés de façon répartie dans la direction circonférentielle.

4. Elément de support selon l'une des revendications précédentes, **caractérisé en ce que**, pour un palier lisse (19) doté d'une surface de glissement (24) disposée sur le côté intérieur (20), le premier angle (33) de la tangente (32) appuyée contre le premier tronçon partiel (30) par rapport à l'axe longitudinal (22) central est plus petit que le deuxième angle (35) de la tangente (34) appuyée contre le deuxième tronçon partiel (31) par rapport à l'axe longitudinal (22) central, et **en ce que**, pour un palier lisse (19) doté d'une surface de glissement (24) disposée sur le côté extérieur (21), le premier angle (33) de la tangente (32) appuyée contre le premier tronçon partiel (30) par rapport à l'axe longitudinal (22) central est plus grand que le deuxième angle (35) de la tangente (34) appuyée contre le deuxième tronçon partiel (31) par rapport à l'axe longitudinal (22) central.

5. Elément de support selon l'une des revendications précédentes, **caractérisé en ce que**, pour un élément de support (7) soumis à une contrainte par force radiale (8) ou par force axiale (9), la surface de roulement (25) de l'élément annulaire (11, 14) est adjacente au premier tronçon partiel (30) de la surface de glissement (24) du palier lisse (19), en particulier le long d'une première ligne de contact (36), et l'élément annulaire (11, 14) et le palier lisse (19) peuvent tourner l'un par rapport à l'autre autour de l'axe longitudinal (22) central, et **en ce que**, pour un élément de support (7) soumis à une contrainte par un couple de basculement (10), la surface de roulement (25) de l'élément annulaire (11, 14) est adjacente au deuxième tronçon partiel (31) de la surface de glissement (24) du palier lisse (19), en particulier le long d'une deuxième ligne de contact (37), et l'élément annulaire (11, 14) et le palier lisse (19) peuvent tourner l'un par rapport à l'autre autour de l'axe longitudinal (22) central.

6. Elément de support selon l'une des revendications précédentes, **caractérisé en ce que** la tangente (34) du deuxième tronçon partiel (31) est constituée de telle sorte que, ou respectivement comporte un angle (35) tel que, dans l'état non soumis à contrainte de l'élément de support (7), la tangente (28) de la surface de roulement (25) est tournée autour du point central de l'élément de support (7) de façon superposable avec la tangente (34) du deuxième tronçon partiel (31).

7. Elément de support selon l'une des revendications précédentes, **caractérisé en ce qu'**un angle d'ouverture (41) entre la tangente (32) appuyée contre le premier tronçon partiel (30) et la tangente (34) appuyée contre le deuxième tronçon partiel (31) est compris entre 175° et 179,99°, en particulier entre 178° et 179,99°, de préférence entre 179° et 179,99°.

8. Eolienne (1) dotée d'un moyeu de rotor (5) et d'une nacelle (2), le moyeu de rotor (5) étant supporté sur la nacelle (2) au moyen d'un élément de support (7), **caractérisée en ce que** l'élément de support (7) est constitué selon l'une des revendications précédentes.
